# FASCICULE DE BREVET EUROPEEN

(11) **EP 1 092 733 B1**
(45) Date de publication et mention de la délivrance du brevet: **12.10.2005**
(21) Numéro de dépôt: 00121835.3
(22) Date de dépôt: 06.10.2000
(51) Int. Cl.: C08F 36/04, C08F 4/52, C08F 4/54

(54) **Catalyseur solide supporté utilisable pour la polymérisation de diènes conjugués, son procédé de préparation et procédé de polymérisation de diènes conjugués utilisant ce catalyseur**
Geträgerter fester Katalysator für die Polymerisation von konjugierten Dienen, Verfahren zu seiner Herstellung und Polymerisationsverfahren unter Verwendung desselben
Supported solid catalyst for the polymerisation of conjugated dienes, process for preparing the same and polymerisation process using the catalyst

(30) Priorité: 11.10.1999 FR 9912744
(43) Date de publication de la demande: 18.04.2001
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: Barbotin, Fanny, 63000 Clermont-Ferrand (FR); Boisson, Christophe, 69100 Villeurbanne (FR); Spitz, Roger, 69006 Lyon (FR)
(74) Mandataire: Hiebel, Robert

(56) Documents cités:
- EP-A- 0 637 589
- WO-A-92/17510

## Description

La présente invention concerne un catalyseur solide supporté utilisable pour la polymérisation de diènes conjugués, un procédé de préparation dudit catalyseur et un procédé de polymérisation de diènes conjugués consistant à utiliser ledit catalyseur. L'invention s'applique par exemple à un catalyseur comprenant un support solide à base de silice.

L'utilisation de terres rares pour la préparation de catalyseurs destinés à polymériser des diènes conjugués est bien connue de l'homme de l'art. Une condition requise pour que le catalyseur préparé présente une activité satisfaisante est que la terre rare soit suffisamment dispersée dans le solvant de polymérisation.

Le document de brevet européen EP-A-856 530 divulgue l'utilisation de dérivés organiques de terres rares pour préparer un catalyseur solide supporté. Ces dérivés organiques sont connus pour être solubles dans les solvants hydrocarbonés de polymérisation et, par conséquent, pour obtenir une bonne dispersion de la terre rare correspondante dans le solvant.

Le catalyseur décrit dans ce document est préparé en faisant réagir dans un tel solvant un support solide inorganique à base de silice,
- d'une part, avec un chlorure d'alkyl aluminium puis avec une solution comprenant un dérivé organique de terre rare tel qu'un carboxylate de néodyme et,
- d'autre part, avec un co-catalyseur constitué d'un alkyl aluminium ou d'un hydrure d'alkyl aluminium.

Un inconvénient majeur de ce catalyseur réside dans la nécessité de synthétiser au préalable ce dérivé organique de terre rare en vue de la préparation dudit catalyseur.

Le document de brevet européen EP-A-637 589 décrit des catalyseurs homogènes, c'est-à-dire non supportés, qui sont à base d'un halogénure de terre rare et qui sont utilisables pour la polymérisation de diènes conjugués. Ces catalyseurs répondent à la formule M(Ar)(AlX₃R)₃, et ils sont préparés par réaction d'exactement 1,5 équivalents d'un trialkyl aluminium avec un complexe répondant à la formule M(Ar)(AlX₄)₃ (dans ces formules, M est une terre rare telle que le néodyme, Ar un solvant hydrocarboné aromatique tel que le toluène, Al un atome d'aluminium et X un halogène).

Pour la méthode détaillée de préparation d'un tel complexe de formule M(Ar)(AlX₄)₃, on pourra se reporter à l'article de H. Liang, Q. Shen, J. Guan et Y. Lin - Journal of organometallic chemistry, 474 (1994), pp. 113-116.

Un inconvénient majeur de ce catalyseur homogène est que son activité dépend étroitement du rapport aluminium / terre rare.

Ainsi, en présence d'un large excès de trialkyl aluminium, on n'obtient plus le catalyseur homogène précité de formule M(Ar)(AlX₃R)₃, mais on observe une dissociation dudit complexe de formule M(Ar)(AlX₄)₃ qui conduit à la formation d'un trihalogénure de terre rare, de formule MX₃ (voir l'article de New. J. Chem. (1995) 19, pp. 713-722).

A l'instar du document EP-A-637 589 précité, l'article de Hu Jing-Yu, Tian He-Qin, Shen Qi, et Liang Hong-Ze - Chinese Science Bulletin, Vol. 37, n° 7, pp. 566-570 (1992) décrit un catalyseur homogène pour la polymérisation de l'isoprène. Ce catalyseur non supporté est obtenu par réaction d'un complexe de formule Nd(C₆H₆)(AlCl₄)₃ avec un trialkyl aluminium (où Nd est le néodyme et C₆H₆ est le benzène).

Ce catalyseur se différencie de celui décrit dans ledit document EP-A-637 589 par la possibilité d'utiliser des rapports aluminium / néodyme pouvant atteindre des valeurs plus élevées, telles que 30 ou 40, pour l'obtention d'un catalyseur présentant une activité catalytique satisfaisante lors de la réaction de polymérisation de l'isoprène.

Cependant, un inconvénient majeur de ce catalyseur homogène réside dans les valeurs réduites de viscosité et de taux d'enchaînements cis 1, 4 qu'il procure pour les polyisoprènes obtenus.

Le but de la présente invention est de remédier à ces inconvénients.

A cet effet, un catalyseur solide supporté selon l'invention, utilisable pour la polymérisation des diènes conjugués, comprend le produit de la réaction
A) d'un complexe représenté par la formule M(Ar)(AlX₄)₃, où M est un métal de terre rare choisi parmi les métaux ayant un numéro atomique compris entre 57 et 71 dans le tableau périodique des éléments de Mendeleev, où Ar est un solvant hydrocarboné aromatique, où Al est un atome d'aluminium et où X est un atome d'un halogène pouvant être le fluor, le chlore, le brome ou l'iode,
B) d'un support solide comprenant au moins un composé d'oxyde métallique inorganique.
   ◇ Selon un premier exemple de réalisation de l'invention, ce catalyseur est préparé en trois étapes:
      * Dans une première étape, on prépare le support solide précité.

Ce support est tel qu'il comprend, à titre de composé d'oxyde métallique inorganique, au moins un composé solide poreux, par exemple à base de silice ou à base d'autres composés poreux communément utilisés en catalyse par l'homme du métier, tels que l'oxyde de magnésium ou l'alumine.

Ce support solide peut également comprendre un mélange de ces composés inorganiques poreux.

A titre préférentiel, on utilise, à titre de composé d'oxyde métallique inorganique, une silice dont la surface spécifique est sensiblement comprise entre 200 et 360 m²/g.

Ce support solide peut être obtenu uniquement par une déshydratation suivie, dans certains cas, d'une déshydroxylation partielle par traitement thermique sous vide, du ou des composés d'oxydes métalliques inorganiques. La température de ce traitement thermique éventuel est sensiblement comprise entre 100° C et 1000° C, et avantageusement entre 300° C et 800° C.

De préférence, le support solide est obtenu par réaction ultérieure du ou des composés d'oxydes métalliques ainsi traités avec un acide de Lewis de formule M'Xₙ, où n est un nombre entier allant de 3 à 5, où X représente un atome d'un halogène pouvant être le fluor, le chlore, le brome ou l'iode et où M' est un métal dont le numéro atomique Z vérifie l'une au choix des deux conditions suivantes:
Z ∈ {5; 13; 22; 26; 40; 50; 51; 72}, et
Z allant de 57 à 71.

A titre encore plus préférentiel, M' est choisi parmi le bore, le titane, le fer, l'aluminium, le zirconium, l'étain, l'hafnium et l'antimoine.

On peut effectuer la réaction avec ledit acide de Lewis selon deux modes de réalisation qui peuvent être utilisés au choix.
- Selon un premier mode, on effectue cette réaction avec l'acide de Lewis pur, si ce dernier est à l'état liquide, ou bien avec l'acide de Lewis en solution dans un solvant hydrocarboné inerte, si ledit acide n'est pas à l'état liquide. Ce solvant inerte peut être aliphatique ou aromatique, et il s'agit de préférence du toluène.

Dans ces deux cas relatifs à l'état de l'acide de Lewis utilisé, on conduit la réaction à une température comprise entre 20° C et 100° C, et pendant une durée pouvant varier entre quelques minutes et plusieurs heures, en fonction de l'acide de Lewis et du ou des composés d'oxydes métalliques qui sont utilisés.

Puis on lave avec un solvant hydrocarboné inerte le support solide qui a été modifié par la réaction précitée, et l'on sèche éventuellement sous vide le support ainsi modifié et lavé.
- Selon un second mode de réalisation qui est particulièrement approprié au cas où l'acide de Lewis se trouve à l'état solide, on effectue ladite réaction avec un excès dudit acide de Lewis, puis on sublime ce dernier sous la pression atmosphérique.
   * Dans une seconde étape, on prépare d'une manière préformée le complexe de formule M(Ar)(AlX₄)₃.

Ce complexe est obtenu par réaction, dans ledit solvant Ar, d'un halogénure dudit métal de terre rare M représenté par la formule MX₃ et d'un halogénure d'aluminium représenté par la formule AlX₃, où X représente un atome du même halogène que précédemment.

Pour ledit solvant Ar, conviennent à titre préférentiel le benzène et le toluène.

De préférence, ledit métal de terre rare M est le néodyme, et l'halogénure correspondant est le trichlorure de néodyme.

Cette réaction entre l'halogénure d'aluminium AlX₃ et l'halogénure de métal de terre rare MX₃ est effectuée de telle manière que le rapport molaire AlX₃ / MX₃ soit égal ou supérieur à 3. Avantageusement, ce rapport est compris entre 4 et 7.

De plus, cette réaction est de préférence effectuée à une température qui est comprise entre 50° C et 100° C et qui est avantageusement voisine de 80° C, pendant un temps de réaction qui est compris entre quelques minutes et plusieurs heures et qui est avantageusement proche de 3 heures.

Cette même réaction conduit à une solution qui comprend ledit complexe M(Ar)(AlX₄)₃, et éventuellement de l'halogénure d'aluminium libre dans le cas où ledit rapport molaire AlX₃ / MX₃ est choisi supérieur à 3.
* Dans une troisième étape, on effectue la réaction de la solution contenant le complexe de formule M(Ar)(AlX₄)₃ avec le support solide, qu'il ait été modifié ou pas avec l'acide de Lewis, pour l'obtention d'un catalyseur selon la présente invention.

Plus précisément, on effectue cette dernière réaction à une température qui est de préférence inférieure à 90° C et pendant une durée pouvant varier entre quelques minutes et plusieurs heures. Cette durée est fonction du complexe et du support utilisés et, de préférence, elle est inférieure à 4 heures.

On lave ensuite le produit obtenu au moyen d'un solvant hydrocarboné inerte, pour l'obtention dudit catalyseur.
◇ Selon un second exemple de réalisation de l'invention, le catalyseur est préparé de la manière suivante:
   * Selon un premier mode de mise en oeuvre de ce second exemple, on fait réagir, dans un solvant hydrocarboné aromatique Ar, un support solide, constitué d'au moins un composé d'oxyde métallique inorganique ayant été déshydraté et éventuellement déshydroxylé, avec un large excès d'un acide de Lewis constitué d'un halogénure d'aluminium de formule AlX₃.

On peut se reporter à la seconde étape du premier exemple de réalisation ci-dessus pour la définition des réactifs utilisés (le numéro atomique Z du métal M' de cet acide de Lewis est choisi égal à 13 pour ce second exemple).

Après que ce support solide et ledit halogénure d'aluminium ont réagi l'un avec l'autre en suspension dans ledit solvant, on leur adjoint un halogénure de terre rare MX₃ (où M est un métal de terre rare choisi parmi les métaux ayant un numéro atomique compris entre 57 et 71 dans le tableau périodique des éléments de Mendeleev, et où X est un atome d'un même halogène que celui dudit halogénure d'aluminium AlX₃), pour obtenir la formation *in situ* du complexe précité de formule M(Ar)(AlX₄)₃.

On conduit la réaction de formation de ce complexe à une température qui peut varier dans une large mesure et qui est préférentiellement de 90° C. Quant à la durée de réaction entre ledit support solide et l'halogénure d'aluminium AlX₃, il peut varier entre quelques minutes et plusieurs heures et, à titre préférentiel, il est égal à 1 heure et demie.

On lave ensuite le produit issu de la réaction entre ledit complexe et ledit support solide au moyen d'un solvant hydrocarboné inerte, puis on sèche sous vide ce produit solide.

On procèdera éventuellement à une sublimation sous vide de l'halogénure d'aluminium en excès de ce produit solide.
* Un second mode de mise en oeuvre de ce second exemple se différencie uniquement du premier mode qui vient d'être décrit en ce que l'on fait réagir en même temps, dans ledit solvant hydrocarboné aromatique Ar, ledit support solide avec un large excès dudit halogénure d'aluminium AlX₃ et avec ledit halogénure de terre rare MX₃, pour obtenir la formation *in situ* dudit complexe M(Ar)(AlX₄)₃.

Comme dans le premier mode, on lave ensuite le produit issu de la réaction entre le complexe et le support solide au moyen d'un solvant hydrocarboné inerte, puis on sèche sous vide ce produit solide. Cette réaction peut également être mise en oeuvre sans ou avec sublimation de l'halogénure d'aluminium AlX₃.
◇ Selon un troisième exemple de réalisation de l'invention, le catalyseur est préparé de la manière suivante:

On fait réagir le catalyseur obtenu selon le premier ou le second exemple de réalisation (le complexe étant préparé d'une manière préformée ou *in situ*, respectivement) avec un composé représenté par la formule AlXₙR₃₋ₙ, où Al est un atome d'aluminium, X est un atome d'un halogène pouvant être le fluor, le chlore, le brome ou l'iode, R représente un atome d'hydrogène ou un groupe alkyl ayant de 1 à 15 atomes de carbone, et n est un nombre entier pouvant aller de 0 à 3.

A titre de composés AlXₙR₃₋ₙ, préférentiels, on peut citer, d'une part, le triéthyl aluminium et le triisobutyl aluminium (dans ces deux cas, n est choisi égal à 0) et, d'autre part, le chlorure de diéthyl aluminium (dans ce cas, n est égal à 1).

On effectue cette réaction avec le composé AlXₙR₃₋ₙ pendant une durée pouvant aller de quelques minutes à plusieurs heures.

On lave ensuite le catalyseur ainsi modifié au moyen d'un solvant hydrocarboné inerte, puis on sèche sous vide le catalyseur modifié et lavé.

On notera que le rapport molaire entre la quantité de composé AlXₙR₃₋ₙ utilisée comme réactif et la quantité de métal de terre rare utilisée pour l'obtention du complexe précité doit être supérieur à 1,5 et peut varier dans une large mesure.

Un procédé de polymérisation de diènes conjugués selon l'invention consiste à faire réagir, dans un solvant hydrocarboné inerte, au moins un monomère diène conjugué avec ledit catalyseur solide supporté de l'invention, tel que défini ci-dessus, et avec un composé activateur comprenant un trialkyl aluminium ou un hydrure de dialkyl aluminium.

A titre de monomères diènes conjugués pouvant être utilisés dans le procédé de polymérisation de l'invention, on peut par exemple citer le butadiène 1,3 et/ou l'isoprène.

De préférence, on réalise cette réaction de polymérisation à une température comprise entre 40° C et 120° C et, à titre encore plus préférentiel, à une température voisine de 70° C.

Les caractéristiques précitées de la présente invention, ainsi que d'autres, seront mieux comprises à la lecture de la description suivante de plusieurs exemples de réalisation de l'invention, donnés à titre illustratif et non limitatif.

Pour tous les exemples selon l'invention, on a opéré sous argon et on a préalablement séché les solvants utilisés sur un tamis moléculaire de 3 Å sous balayage d'argon. De plus, on a établi les viscosités inhérentes à 25° C dans le toluène, à une concentration de 0,1 g/dl.

Les terres rares qui sont utilisées dans ces exemples pour préparer les différents catalyseurs sont le néodyme, pour les exemples 1 à 10, et le praséodyme, pour l'exemple 12.

Les supports solides qui sont utilisés dans ces exemples comprennent respectivement:
- dans les exemples 1 à 10 et dans l'exemple 12, un composé d'oxyde métallique inorganique qui est constitué d'une silice dont la surface spécifique B. E. T. est comprise entre 280 et 355 m²/g, laquelle est commercialisée par la société GRACE DAVISON sous la dénomination « SILICA 1 332 » et qui est traitée de la manière suivante.
   On soumet 5 g de cette silice « 1 332 » à un traitement thermique sous vide, qui comprend successivement une montée en température de 20° C à 100° C en trente minutes, de 100° C à 130° C en trente minutes, de 130° C à 450° C en une heure, un palier de 4 heures à 450° C et une redescente à température ambiante. Suite à ce traitement, le taux de groupes hydroxyles est de 1,4 mmol/g à la surface de la silice; et
- dans l'exemple 11, un composé d'oxyde métallique inorganique qui est constitué d'une silice dont la surface spécifique B. E. T. est comprise entre 175 et 225 m²/g, qui est commercialisée par la société DEGUSSA sous la dénomination « AEROSIL 200» et qui est traitée de la manière suivante.

On soumet 5 g de cette silice « AEROSIL 200 » à un traitement thermique sous vide, qui comprend successivement une montée en température de 20° C à 100° C en trente minutes, de 100° C à 130° C en trente minutes, de 130° C à 450° C en une heure, un palier de 2 heures à 450° C et une redescente à température ambiante. Suite à ce traitement, le taux de groupes hydroxyles est de 0,7 mmol/g à la surface de la silice.

Dans les exemples qui suivent, on a déterminé les taux d'enchaînements cis des polymères obtenus par la technique utilisant un rayonnement proche-infrarouge, excepté dans l'exemple 5 où l'on a déterminé ces taux par la technique connue sous le nom de RMN¹³C.

### EXEMPLE 1:

### 1) Préparation du catalyseur (complexe formé in situ):

Dans du toluène, on agite conjointement 4,6 g d'un acide de Lewis constitué d'AlCl₃ (trichlorure d'aluminium) anhydre et 2,37 g de ladite silice « I 332 » traitée thermiquement, à une température de 80° C et pendant 1 heure 30. On obtient ainsi un support solide pour le catalyseur.

On ajoute ensuite 1,71 g de NdCl₃ et on chauffe l'ensemble à 80° C pendant 3 heures. On forme ainsi *in situ* un complexe Nd(η⁶-C₆H₅Me)(AlCl₄)₃, où Me est un groupe méthyl et η⁶-C₆H₅Me représente le toluène, utilisé à titre de solvant Ar.

Puis on lave le catalyseur obtenu au moyen de toluène, et on le sèche sous vide. On sublime ensuite sous vide l'excès de AlCl₃.

### 2) Procédé de polymérisation du butadiène:

On introduit dans un réacteur une suspension constituée de 180 ml d'heptane, additionnée de 85 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 60 minutes de réaction, on stoppe la polymérisation par refroidissement du réacteur puis par une précipitation du polymère obtenu dans le méthanol.

On obtient 1,1 g de polybutadiène dont la viscosité inhérente est de 3,12 dl/g et dont le taux d'enchaînements cis est légèrement supérieur à 99 %.

### EXEMPLE 2:

### 1) Préparation du catalyseur (complexe formé in situ et addition finale d'un composé de formule AlXₙR₃₋ₙ):

Dans du toluène, on agite conjointement 1,93 g d'un acide de Lewis constitué d'AlCl₃ anhydre et 1,71 g de ladite silice « I 332 » traitée thermiquement, à une température de 90° C et pendant 1 heure. On obtient ainsi un support solide pour le catalyseur.

On ajoute ensuite 0,8 g de NdCl₃ et on chauffe l'ensemble à 90° C pendant 3 heures 15. On forme ainsi *in situ* un complexe Nd(η⁶-C₆H₅Me)(AlCl₄)₃. Puis on lave le solide obtenu au moyen de toluène et on le sèche sous vide. On sublime ensuite l'excès d'AlCl₃ sous vide et à 130° C.

Puis on traite dans du toluène 1 g de ce solide par 10 ml d'une solution molaire de triéthyl aluminium (représentée par la formule susmentionnée AlXₙR₃₋ₙ avec n=0). On lave à l'heptane le catalyseur obtenu et on le sèche sous vide.

### 2) Procédé de polymérisation du butadiène:

On introduit dans un réacteur une suspension constituée de 180 ml d'heptane, additionnée de 85 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 30 minutes de réaction, on stoppe la polymérisation par refroidissement du réacteur puis par une précipitation du polymère obtenu dans le méthanol.

On obtient 6,5 g de polybutadiène dont la viscosité inhérente est de 2,28 dl/g et dont le taux d'enchaînements cis est légèrement supérieur à 99 %.

### EXEMPLE 3:

### 1) Préparation du catalyseur (complexe préformé et addition finale d'un composé de formule AlXₙR₃₋ₙ):

On ajoute environ 30 ml d'un acide de Lewis constitué de TiCl₄ (tétrachlorure de titane) à 1 g de ladite silice « I 332 » traitée thermiquement. On agite l'ensemble à une température de 80° C et pendant 1 heure, puis on lave le solide obtenu à l'heptane. On obtient ainsi un support solide pour le catalyseur.

Puis, indépendamment de ce support solide, on agite conjointement dans du toluène 1,09 g d'AlCl₃ anhydre et 0,41 g de NdCl₃, à une température de 90° C et pendant 3 heures. On obtient ainsi une solution comprenant un complexe Nd(η⁶-C₆H₅Me)(AlCl₄)₃.

On fait ensuite réagir le support solide précité avec ce complexe, pendant 1 heure et à 90° C. On lave le solide obtenu au moyen de toluène, puis on le sèche sous vide.

Puis on fait réagir à froid 0,57 g du solide ainsi obtenu avec 8 ml d'une solution molaire de triéthyl aluminium. Puis on lave à l'heptane le catalyseur ainsi obtenu, et on le sèche sous vide.

### 2) Procédé de polymérisation du butadiène:

On introduit dans un réacteur une suspension constituée de 180 ml d'heptane, additionnée de 83 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 15 minutes de réaction, on stoppe la polymérisation par refroidissement du réacteur puis par une précipitation du polymère obtenu dans le méthanol.

On obtient 11,1 g de polybutadiène dont la viscosité inhérente est de 2,20 dl/g et dont le taux d'enchaînements cis est légèrement supérieur à 99 %.

### EXEMPLE 4:

### 1) Préparation du catalyseur (complexe préformé et addition finale d'un composé de formule AlXₙR₃₋ₙ):

On place dans un four un mélange de 2,35 g de ladite silice « I 332 » traitée thermiquement et de 1,21 g d'un acide de Lewis constitué de ZrCl₄ (tétrachlorure de zirconium). On y sublime sous pression atmosphérique le ZrCl₄ à une température de 300° C et pendant une demi-heure. On obtient ainsi un support solide pour le catalyseur.

Puis, indépendamment de ce support solide, on agite conjointement dans du toluène 0,73 g d'AlCl₃ anhydre et 0,36 g de NdCl₃, à une température de 90° C et pendant 3 heures. On obtient ainsi une solution comprenant un complexe Nd(η⁶-C₆H₅Me)(AlCl₄)₃.

On fait ensuite réagir 0,9 g du support solide précité avec ce complexe, pendant 16 heures et demie et à 80° C. On lave le solide obtenu au moyen de toluène, puis on le sèche sous vide.

Puis on fait réagir le solide ainsi obtenu avec 10 ml d'une solution molaire de triéthyl aluminium. Puis on lave à l'heptane le catalyseur ainsi obtenu, et on le sèche sous vide.

### 2) Procédé de polymérisation du butadiène:

On introduit dans un réacteur une suspension constituée de 180 ml d'heptane, additionnée de 71 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 60 minutes de réaction, on stoppe la polymérisation par refroidissement du réacteur puis par une précipitation du polymère obtenu dans le méthanol.

On obtient 0,8 g de polybutadiène dont la viscosité inhérente est de 2,25 dl/g et dont le taux d'enchaînements cis est légèrement supérieur à 99 %.

### EXEMPLE 5:

### 1) Préparation du catalyseur (avec complexe préformé et addition finale d'un composé de formule AlXₙR₃₋ₙ):

On ajoute 11 ml d'une solution molaire d'un acide de Lewis constitué de BCl₃ (trichlorure de bore) dans de l'heptane, à 1,7 g de ladite silice « I 332 » traitée thermiquement et placée dans de l'heptane. On agite l'ensemble à une température de 70° C et pendant 2 heures et 20 minutes, puis on lave le solide obtenu à l'heptane. On obtient ainsi un support solide pour le catalyseur.

Puis, indépendamment de ce support solide, on agite conjointement dans du toluène 1,76 g d'AlCl₃ anhydre et 0,68 g de NdCl₃, à une température de 90° C et pendant 3 heures. On obtient ainsi une solution comprenant un complexe Nd(η⁶-C₆H₅Me)(AlCl₄)₃.

On fait ensuite réagir le support solide précité avec ce complexe, pendant 3 heures et à 90° C. On lave le solide obtenu au moyen de toluène, puis on le sèche sous vide.

Puis on fait réagir le solide ainsi obtenu avec 10 ml d'une solution molaire de triéthyl aluminium. On lave ensuite à l'heptane le catalyseur ainsi obtenu, et on le sèche sous vide.

### 2) Procédé de polymérisation du butadiène:

On introduit dans un réacteur une suspension constituée de 180 ml d'heptane, additionnée de 35 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 15 minutes de réaction, on stoppe la polymérisation par refroidissement du réacteur puis par une précipitation du polymère obtenu dans le méthanol.

On obtient 10,4 g de polybutadiène dont la viscosité inhérente est de 2,15 dl/g et dont le taux d'enchaînements cis est légèrement supérieur à 99 %.

### 3) Procédé de polymérisation de l'isoprène:

On introduit dans un réacteur un mélange comprenant 116 ml de cyclohexane, 35 mg du catalyseur préparé comme indiqué dans cet exemple, 3 mmol/l d'un composé activateur constitué d'hydrure de diisobutyl aluminium, et 14,7 ml d'isoprène. On porte la température du réacteur à 60° C. Après 20 heures de réaction, on stoppe la polymérisation par ajout de méthanol. On stabilise le polyisoprène obtenu et on le sèche sous vide.

On obtient 8,9 g de polyisoprène dont la viscosité inhérente est de 6,5 dl/g et dont le taux d'enchaînements cis est de 95,8 %.

Selon une variante de mise en oeuvre de ce procédé, on introduit dans le réacteur 30 mg dudit catalyseur au lieu de 35 mg, les autres conditions réactionnelles étant inchangées, y compris la température du réacteur. Après 1 heure de réaction (au lieu des 20 heures précitées), on stoppe la polymérisation par ajout de méthanol, puis on stabilise le polyisoprène obtenu et on le sèche sous vide.

On obtient à présent 2,8 g de polyisoprène dont la viscosité inhérente est de 4 dl/g et dont le taux d'enchaînements cis est de 96,1 %.

### EXEMPLE 6:

### 1) Préparation du catalyseur (complexe préformé et addition finale d'un composé de formule AlXₙR₃₋ₙ):

On ajoute 1,2 ml d'un acide de Lewis constitué de SnCl₄ (tétrachlorure d'étain) à 1,5 g de ladite silice « I 332 » traitée thermiquement et placée dans du toluène. On agite l'ensemble à une température de 100° C et pendant 5 heures, puis on lave le solide obtenu au toluène. On obtient ainsi un support solide pour le catalyseur.

Puis, indépendamment de ce support solide, on agite conjointement dans du toluène 1,9 g d'AlCl₃ anhydre et 0,68 g de NdCl₃, à une température de 90° C et pendant 3 heures. On obtient ainsi une solution comprenant un complexe Nd(η⁶-C₆H₅Me)(AlCl₄)₃.

On fait ensuite réagir le support solide précité avec ce complexe, pendant 3 heures et à 90° C. On lave le solide obtenu au moyen de toluène, puis on le sèche sous vide.

Puis on fait réagir le solide ainsi obtenu avec 10 ml d'une solution molaire de triéthyl aluminium. On lave ensuite à l'heptane le catalyseur ainsi obtenu, et on le sèche sous vide.

### 2) Procédé de polymérisation du butadiène:

On introduit dans un réacteur une suspension constituée de 180 ml d'heptane, additionnée de 77 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 15 minutes de réaction, on stoppe la polymérisation par refroidissement du réacteur puis par une précipitation du polymère obtenu dans le méthanol.

On obtient 9,5 g de polybutadiène dont la viscosité inhérente est de 5,22 dl/g et dont le taux d'enchaînements cis est légèrement supérieur à 99 %.

### EXEMPLE 7:

### 1) Préparation du catalyseur (complexe formé in situ et addition finale d'un composé de formule AlXₙR₃₋ₙ):

Dans du toluène, on agite conjointement 3,24 g d'un acide de Lewis constitué d'AlCl₃ anhydre et 1,81 g de ladite silice « I 332 » traitée thermiquement, à une température de 80° C et pendant 2 heures et demie. On obtient ainsi un support solide pour le catalyseur.

On ajoute ensuite 1,44 g de NdCl₃ et on chauffe l'ensemble à 80° C pendant 3 heures. On forme ainsi *in situ* un complexe Nd(η⁶-C₆H₅Me)(AlCl₄)₃. Puis on lave le solide obtenu au moyen de toluène et d'heptane, et on le sèche sous vide. On sublime ensuite l'excès d'AlCl₃ sous vide et à 130° C.

Puis on fait réagir, dans de l'heptane et à 50° C, ce solide avec 20 ml d'une solution de chlorure de diéthyl aluminium de masse molaire 1,15 M dans de l'heptane (représentée par la formule susmentionnée AlXₙR₃₋ₙ avec n=1). On lave trois fois et à froid au moyen de 50 ml d'heptane le catalyseur obtenu, et on le sèche sous vide.

### 2) Procédé de polymérisation du butadiène:

On introduit dans un réacteur une suspension constituée de 180 ml d'heptane, additionnée de 80 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 60 minutes de réaction, on stoppe la polymérisation par refroidissement du réacteur puis par une précipitation du polymère obtenu dans le méthanol.

On obtient 0,46 g de polybutadiène dont la viscosité inhérente est de 4,50 dl/g et dont le taux d'enchaînements cis est légèrement supérieur à 99 %.

### EXEMPLE 8:

### 1) Préparation du catalyseur (complexe préformé et addition finale d'un composé de formule AlXₙR₃₋ₙ):

On ajoute à 1,1 g de ladite silice « I 332 » traitée thermiquement environ 30 ml d'un acide de Lewis constitué de TiCl₄. On agite l'ensemble à une température de 80° C et pendant une heure, puis on lave le solide obtenu à l'heptane. On obtient ainsi un support solide pour le catalyseur.

On ajoute ensuite à 0,61 g de ce support 0,21 g de NdCl₃ et 0,23 g d'AlCl₃, puis on agite l'ensemble à 90° C et pendant 2 jours. On forme ainsi *in situ* un complexe Nd(η⁶-C₆H₅Me)(AlCl₄)₃. Puis on lave le solide obtenu au toluène, et on le sèche sous vide.

On fait ensuite réagir ce solide avec 5 ml d'une solution de triéthyl aluminium 1,25 M, à température ambiante et pendant 3 heures. Puis on lave à l'heptane le catalyseur obtenu, et on le sèche sous vide.

### 2) Procédé de polymérisation du butadiène:

On introduit dans un réacteur une suspension constituée de 180 ml d'heptane, additionnée de 66 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 30 minutes de réaction, on stoppe la polymérisation par refroidissement du réacteur puis par une précipitation du polymère obtenu dans le méthanol.

On obtient 6,1 g de polybutadiène dont la viscosité inhérente est de 2,25 dl/g et dont le taux d'enchaînements cis est légèrement supérieur à 99 %.

### EXEMPLE 9:

### 1) Préparation du catalyseur (avec complexe préformé et addition finale d'un composé de formule AlXₙR₃₋ₙ):

On ajoute 0,6 ml d'une solution d'un acide de Lewis constitué de SbCl₅ (pentachlorure d'antimoine) dans de l'heptane, à 1,78 g de ladite silice « I 332 » traitée thermiquement. On agite l'ensemble à température ambiante et pendant 2 heures. On obtient ainsi un support solide pour le catalyseur.

Puis, indépendamment de ce support solide, on agite conjointement dans du toluène 1,55 g de NdCl₃ et 0,62 g d'AlCl₃, à une température de 90° C et pendant 3 heures. On obtient ainsi une solution comprenant un complexe Nd(η⁶-C₆H₅Me)(AlCl₄)₃.

On fait ensuite réagir le support solide précité avec ce complexe, pendant 4 heures et à 80° C. On lave le solide obtenu avec du toluène, puis on le fait réagir avec 14 ml d'une solution molaire de triéthyl aluminium. On lave ensuite à l'heptane le catalyseur ainsi obtenu, et on le sèche sous vide.

### 2) Procédé de polymérisation du butadiène:

On introduit dans un réacteur une suspension constituée de 180 ml d'heptane, additionnée de 32,5 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 30 minutes de réaction, on stoppe la polymérisation par refroidissement du réacteur puis par une précipitation du polymère obtenu dans le méthanol.

On obtient 4 g de polybutadiène dont la viscosité inhérente est de 4,39 dl/g et dont le taux d'enchaînements cis est légèrement supérieur à 99 %.

### EXEMPLE 10:

### 1) Préparation du catalyseur (avec complexe préformé et addition finale d'un composé de formule AlXₙR₃₋ₙ):

On place dans un four un mélange de 1,47 g de ladite silice « I 332 » traitée thermiquement et 0,67 g de HfCl₄ (tétrachlorure d'hafnium). On sublime sous pression atmosphérique le HfCl₄ à une température de 300° C. On obtient ainsi un support solide pour le catalyseur.

Puis, indépendamment de ce support solide, on agite conjointement dans du toluène 0,7 g de NdCl₃ et 1,51 g d'AlCl₃, à une température de 90° C et pendant 3 heures. On obtient ainsi une solution comprenant un complexe Nd(η⁶-C₆H₅Me)(AlCl₄)₃.

On fait ensuite réagir le support solide précité avec ce complexe, pendant 2 heures et à 90° C. On lave le solide obtenu avec du toluène, puis on le fait réagir avec 19 ml d'une solution 1,1 molaire de triéthyl aluminium. On lave ensuite à l'heptane le catalyseur ainsi obtenu, et on le sèche sous vide.

### 2) Procédé de polymérisation du butadiène:

On introduit dans un réacteur une suspension constituée de 180 ml d'heptane, additionnée de 108,5 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 20 minutes de réaction, on stoppe la polymérisation par refroidissement du réacteur puis par une précipitation du polymère obtenu dans le méthanol.

On obtient 4,25 g de polybutadiène dont la viscosité inhérente est de 4 dl/g et dont le taux d'enchaînements cis est légèrement supérieur à 99 %.

### EXEMPLE 11:

### 1) Préparation du catalyseur (avec complexe préformé et addition finale d'un composé de formule AlXₙR₃₋ₙ):

On ajoute 6 ml d'une solution molaire d'un acide de Lewis constitué de BCl₃ dans de l'heptane, à 2,69 g de ladite silice « AEROSIL 200 » traitée thermiquement et placée dans de l'heptane. On agite l'ensemble à une température de 70° C et pendant 1 heure, puis on lave le solide obtenu et on le sèche sous vide. On obtient ainsi un support solide pour le catalyseur.

Puis, indépendamment de ce support solide, on agite conjointement dans du toluène 0,6 g de NdCl₃ et 1,6 g d'AlCl₃, à une température de 90° C et pendant 3 heures. On obtient ainsi une solution comprenant un complexe Nd(η⁶-C₆H₅Me)(AlCl₄)₃.

On fait ensuite réagir le support solide précité avec ce complexe, pendant 4 heures et à 80° C. On lave le solide obtenu avec du toluène, puis on le fait réagir avec 10 ml d'une solution molaire de triéthyl aluminium. On lave ensuite à l'heptane le catalyseur ainsi obtenu, et on le sèche sous vide.

### 2) Procédé de polymérisation du butadiène:

On introduit dans un réacteur une suspension constituée de 180 ml d'heptane, additionnée de 68,5 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 30 minutes de réaction, on stoppe la polymérisation par refroidissement du réacteur puis par une précipitation du polymère obtenu dans le méthanol.

On obtient 0,40 g de polybutadiène dont la viscosité inhérente est de 4 dl/g et dont le taux d'enchaînements cis est de 99 %.

### EXEMPLE 12:

### 1) Préparation du catalyseur (avec complexe préformé et addition finale d'un composé de formule AlXₙR₃₋ₙ):

On ajoute 7,9 ml d'une solution molaire d'un acide de Lewis constitué de BCl₃ dans de l'heptane, à 1,23 g de ladite silice « GRACE 332 » traitée thermiquement et placée dans de l'heptane. On agite l'ensemble à une température de 70° C et pendant 1 heure, puis on lave le solide obtenu et on le sèche sous vide. On obtient ainsi un support solide pour le catalyseur.

Puis, indépendamment de ce support solide, on agite conjointement dans du toluène 0,42 g de PrCl₃ (trichlorure de praséodyme) et 1,58 g d'AlCl₃, à une température de 90° C et pendant 1 heure 30 minutes. On obtient ainsi une solution comprenant un complexe de formule Pr(η⁶-C₆H₅Me)(AlCl₄)₃.

On fait ensuite réagir le support solide précité avec ce complexe, pendant 1 heure 30 minutes et à 90° C. On lave le solide obtenu avec du toluène, puis on le fait réagir avec 8,2 ml d'une solution 1,15 molaire de triéthyl aluminium. On lave ensuite à l'heptane le catalyseur ainsi obtenu, et on le sèche sous vide.

### 2) Procédé de polymérisation du butadiène:

On introduit dans un réacteur une suspension constituée de 180 ml d'heptane, additionnée de 68,5 mg du catalyseur préparé comme indiqué dans cet exemple, et de 3 mmol/l d'un composé activateur constitué d'hydrure de diisobutyl aluminium. On ajoute ensuite 30 ml de butadiène et on porte la température du réacteur à 70° C. Après 30 minutes de réaction, on stoppe la polymérisation par refroidissement du réacteur puis par une précipitation du polymère obtenu dans le méthanol.

On obtient 2,54 g de polybutadiène dont la viscosité inhérente est de 3 dl/g et dont le taux d'enchaînements cis est de 98 %.

Ces exemples montrent qu'un catalyseur solide supporté selon la présente invention permet d'obtenir des polymères diéniques très stéréospécifiques en cis.

On notera qu'un catalyseur selon l'invention présente l'avantage de ne pas nécessiter une synthèse préalable d'un dérivé organique de terre rare, tel qu'un carboxylate, en vue de solubiliser avec une dispersion satisfaisante cette terre rare dans un solvant hydrocarboné.

On notera par ailleurs que ce catalyseur solide supporté selon l'invention présente l'avantage de présenter une activité élevée et stable, indépendamment de la quantité de composé de formule AlXₙR₃₋ₙ qui est utilisée pour sa préparation. On peut ainsi utiliser par exemple un large excès de trialkyl aluminium à titre de composé de formule AlXₙR₃₋ₙ, avec une activité catalytique satisfaisante.

## Revendications

1. Catalyseur solide supporté utilisable pour la polymérisation de diènes conjugués, **caractérisé en ce qu'**il comprend le produit de la réaction
A) d'un complexe représenté par la formule M(Ar)(AlX₄)₃, où M est un métal de terre rare choisi parmi les métaux ayant un numéro atomique compris entre 57 et 71 dans le tableau périodique des éléments de Mendeleev, où Ar est un solvant hydrocarboné aromatique, où Al est un atome d'aluminium et où X est un atome d'un halogène pouvant être le fluor, le chlore, le brome ou l'iode,
B) d'un support solide comprenant au moins un composé d'oxyde métallique inorganique.

2. Catalyseur solide supporté selon la revendication 1, **caractérisé en ce que** ledit support solide comprend de la silice.

3. Catalyseur solide supporté selon la revendication 1 ou 2, **caractérisé en ce qu'**il comprend en outre un composé représenté par la formule AlXₙR₃₋ₙ, où Al est un atome d'aluminium, X est un atome d'un halogène pouvant être le fluor, le chlore, le brome ou l'iode, R représente un atome d'hydrogène ou un groupe alkyl ayant de 1 à 15 atomes de carbone, et n est un nombre entier pouvant aller de 0 à 3.

4. Catalyseur solide supporté selon la revendication 3, **caractérisé en ce que** ledit composé AlXₙR₃₋ₙ est le triéthyl aluminium, le triisobutyl aluminium ou le chlorure de diéthyl aluminium.

5. Catalyseur solide supporté selon une des revendications précédentes, **caractérisé en ce que** ledit métal de terre rare M est le néodyme.

6. Catalyseur solide supporté selon une des revendications précédentes, **caractérisé en ce que** ledit halogène X est le chlore.

7. Catalyseur solide supporté selon une des revendications précédentes, **caractérisé en ce que** ledit support solide comprend le produit de la réaction dudit ou desdits composés d'oxydes métalliques inorganiques avec un acide de Lewis de formule M'Xₙ, où n est un nombre entier allant de 3 à 5, où X représente un atome d'un halogène pouvant être le fluor, le chlore, le brome ou l'iode et où M' est un métal dont le numéro atomique Z vérifie l'une au choix des deux conditions suivantes:
Z ∈ {5; 13; 22; 26; 40; 50; 51; 72}, et
Z allant de 57 à 71.

8. Catalyseur solide supporté selon une des revendications précédentes, **caractérisé en ce que** ledit métal M' est choisi parmi le bore, le titane, le fer, l'aluminium, le zirconium, l'étain, l'hafnium et l'antimoine.

9. Procédé de préparation d'un catalyseur solide supporté, ledit catalyseur étant tel que défini à l'une des revendications précédentes, **caractérisé en ce qu'**il consiste
- dans une première étape, à préparer ledit support solide,
- dans une seconde étape, à préparer ledit complexe de formule M(Ar)(AlX₄)₃ par réaction, dans ledit solvant hydrocarboné aromatique Ar, d'un halogénure dudit métal de terre rare M représenté par la formule MX₃ et d'un même halogénure d'aluminium représenté par la formule AlX₃,
- dans une troisième étape, à faire réagir ledit complexe avec ledit support solide, pour obtenir ledit catalyseur.

10. Procédé de préparation selon la revendication 9, **caractérisé en ce qu'**il consiste à effectuer ladite réaction entre ledit halogénure d'aluminium AlX₃ et ledit halogénure de métal de terre rare MX₃ de manière que le rapport molaire AlX₃ / MX₃ soit égal ou supérieur à 3.

11. Procédé de préparation selon la revendication 10, **caractérisé en ce qu'**il consiste à effectuer ladite réaction de telle manière que ledit rapport molaire soit compris entre 4 et 7.

12. Procédé de préparation d'un catalyseur solide supporté, ledit catalyseur étant tel que défini à l'une des revendications 1 à 8, **caractérisé en ce qu'**il consiste
- dans une première étape, à faire réagir dans ledit solvant hydrocarboné aromatique Ar ledit support solide avec un excès d'un halogénure d'aluminium représenté par la formule AlX₃ et,
- dans une seconde étape, à faire réagir le produit de ladite première étape avec un même halogénure dudit métal de terre rare représenté par la formule MX₃, pour obtenir la formation dudit catalyseur comprenant ledit complexe M(Ar)(AlX₄)₃.

13. Procédé de préparation d'un catalyseur solide supporté, ledit catalyseur étant tel que défini à l'une des revendications 1 à 8, **caractérisé en ce qu'**il consiste à faire réagir d'une manière concomitante, dans ledit solvant hydrocarboné aromatique Ar, ledit support solide avec un excès d'un halogénure d'aluminium AlX₃ et avec un même halogénure de terre rare MX₃, pour obtenir la formation dudit catalyseur comprenant ledit complexe M(Ar)(AlX₄)₃.

14. Procédé de préparation selon une des revendications 9 à 13, **caractérisé en ce qu'**il consiste à faire réagir ledit catalyseur avec un composé représenté par la formule AlXₙR₃₋ₙ, où Al est un atome d'aluminium, X est un atome d'un halogène pouvant être le fluor, le chlore, le brome ou l'iode, R représente un atome d'hydrogène ou un groupe alkyl ayant de 1 à 15 atomes de carbone, et n est un nombre entier pouvant aller de 0 à 3.

15. Procédé de préparation selon la revendication 14, **caractérisé en ce qu'**il consiste à utiliser le triéthyl aluminium, le triisobutyl aluminium ou le chlorure de diéthyl aluminium pour ledit composé de formule AlXₙR₃₋ₙ.

16. Procédé de préparation selon une des revendications 9 à 15, **caractérisé en ce qu'**il consiste à déshydrater ledit ou lesdits composés d'oxydes métalliques inorganiques puis de les déshydroxyler partiellement par traitement thermique à une température comprise entre 300° C et 800° C, en vue de préparer ledit support solide.

17. Procédé de préparation selon une des revendications 9 à 16, **caractérisé en ce qu'**il consiste à utiliser pour ledit support solide le produit de la réaction dudit ou desdits composés d'oxydes métalliques inorganiques avec un acide de Lewis de formule M'Xₙ, où n est un nombre entier allant de 3 à 5, où X représente un atome d'un halogène pouvant être le fluor, le chlore, le brome ou l'iode et où M' est un métal dont le numéro atomique Z vérifie l'une au choix des deux conditions suivantes:
Z ∈ {5; 13; 22; 26; 40; 50; 51; 72}, et
Z allant de 57 à 71.

18. Procédé de préparation selon la revendication 17, **caractérisé en ce qu'**il consiste à utiliser pour ledit métal M' le bore, le titane, le fer, l'aluminium, le zirconium, l'étain, l'hafnium ou l'antimoine.

19. Procédé de préparation selon la revendication 17 ou 18, **caractérisé en ce qu'**il consiste à faire réagir ledit acide de Lewis de formule M'Xₙ à l'état solide et en excès avec ledit ou lesdits composés d'oxydes métalliques inorganiques, puis à sublimer ledit acide.

20. Procédé de préparation selon la revendication 17 ou 18, **caractérisé en ce qu'**il consiste à faire réagir ledit acide de Lewis de formule M'Xₙ, en solution dans un solvant hydrocarboné inerte, avec ledit ou lesdits composés d'oxydes métalliques inorganiques.

21. Procédé de polymérisation de diènes conjugués dans un solvant hydrocarboné inerte consistant à utiliser un catalyseur solide supporté, **caractérisé en ce qu'**il consiste à utiliser, à titre de catalyseur solide supporté, un catalyseur préparé selon un procédé tel que défini à l'une des revendications 9 à 20, et à ajouter à ce catalyseur un composé activateur comprenant un trialkyl aluminium ou un hydrure de dialkyl aluminium.

22. Procédé de polymérisation selon la revendication 21, **caractérisé en ce qu'**il consiste à utiliser à titre de diènes conjugués le butadiène 1, 3 et/ou l'isoprène.

## Patentansprüche

1. Trägergebundener fester Katalysator, der für die Polymerisation konjugierter Diene verwendbar ist, **dadurch gekennzeichnet, dass** er das Produkt der Umsetzung
A) eines Komplexes, der der Formel M(Ar)(AlX₄)₃ entspricht, worin M ein Seltenerdmetall bedeutet, das unter den Metallen ausgewählt ist, die im Periodensystem der Elemente eine Ordnungszahl aufweisen, die im Bereich von 57 bis 71 liegt, Ar ein Lösemittel aus einem aromatischen Kohlenwasserstoff ist, Al ein Aluminiumatom bedeutet und X ein Halogenatom ist, bei dem es sich um Fluor, Chlor, Brom oder Iod handeln kann,
B) mit einem festen Träger, der mindestens eine anorganische Metalloxidverbindung enthält,
umfasst.

2. Trägergebundener fester Katalysator nach Anspruch 1, **dadurch gekennzeichnet, dass** der feste Träger Kieselsäure umfasst.

3. Trägergebundener fester Katalysator nach Anspruch 1 oder 2, **dadurch gekennzeichnet, dass** er außerdem eine Verbindung enthält, die der Formel AlXₙR₃₋ₙ entspricht, worin Al ein Aluminiumatom ist, X ein Halogenatom ist, bei dem es sich Fluor, Chlor, Brom oder Iod handeln kann, worin R ein Wasserstoffatom oder eine Alkylgruppe, die 1 bis 15 Kohlenstoffatome aufweist, bedeutet und n eine ganze Zahl ist, die im Bereich von 0 bis 3 liegen kann.

4. Trägergebundener fester Katalysator nach Anspruch 3, **dadurch gekennzeichnet, dass** es sich bei der Verbindung AlXₙR₃₋ₙ um Triethylaluminium, Triisobutylaluminium oder Diethylaluminiumchlorid handelt.

5. Trägergebundener fester Katalysator nach einem der vorhergehenden Ansprüche, **dadurch gekennzeichnet, dass** es sich bei dem Seltenerdmetall M um Neodym handelt.

6. Trägergebundener fester Katalysator nach einem der vorhergehenden Ansprüche, **dadurch gekennzeichnet, dass** es sich bei dem Halogen X um Chlor handelt.

7. Trägergebundener fester Katalysator nach einem der vorhergehenden Ansprüche, **dadurch gekennzeichnet, dass** der feste Träger der Produkt der Umsetzung der anorganischen Metalloxidverbindung(en) mit einer Lewis-Säure der Formel M'Xₙ umfasst, worin n eine ganze Zahl ist, die im Bereich von 3 bis 5 liegt, X ein Halogenatom darstellt, bei dem es sich um Fluor, Chlor, Brom oder Iod handeln kann, und M' ein Metall ist, dessen Ordnungszahl Z wahlweise eine der beiden folgenden Bedingungen erfüllt:
Z ∈ {5; 13; 22; 26; 40; 50; 51; 72}, und
Z liegt im Bereich von 57 bis 71.

8. Trägergebundener fester Katalysator nach einem der vorhergehenden Ansprüche, **dadurch gekennzeichnet, dass** das Metall M' unter Bor, Titan, Eisen, Aluminium, Zirconium, Zinn, Hafnium und Antimon ausgewählt ist.

9. Verfahren zur Herstellung eines trägergebundenen festen Katalysators, wobei der Katalysator wie in einem der vorhergehenden Ansprüche definiert ist, **dadurch gekennzeichnet, dass** es darin besteht,
- in einem ersten Schritt den festen Träger herzustellen,
- in einem zweiten Schritt den Komplex der Formel M(Ar)(AlX₄)₃ durch Umsetzung eines Halogenids des Seltenerdmetalls M, das der Formel MX₃ entspricht, mit dem vom gleichen Halogen stammenden Aluminiumhalogenid, das der Formel AlX₃ entspricht, in dem aromatischen Kohlenwasserstofflösemittel Ar herzustellen,
- in einem dritten Schritt diesen Komplex mit dem festen Träger umzusetzen, um den Katalysator zu erhalten.

10. Herstellungsverfahren nach Anspruch 9, **dadurch gekennzeichnet, dass** es darin besteht, die Umsetzung des Aluminiumhalogenids AlX₃ mit dem Seltenerdmetallhalogenid MX₃ so durchzuführen, dass das molare Verhältnis AlX₃/MX₃ größer als oder gleich 3 ist.

11. Herstellungsverfahren nach Anspruch 10, **dadurch gekennzeichnet, dass** es darin besteht, die Umsetzung so durchzuführen, dass das molare Verhältnis im Bereich von 4 bis 7 liegt.

12. Verfahren zur Herstellung eines trägergebundenen festen Katalysators, wobei der Katalysator wie in einem der Ansprüche 1 bis 8 definiert ist, **dadurch gekennzeichnet, dass** es darin besteht,
- in einem ersten Schritt den festen Träger mit einem Überschuss an Aluminiumhalogenid, das der Formel AlX₃ entspricht, in dem aromatischen Kohlenwasserstofflösemittel Ar umzusetzen,
- in einem zweiten Schritt das Reaktionsprodukt des ersten Schrittes mit dem vom gleichen Halogen stammenden Seltenerdmetallhalogenid, das der Formel MX₃ entspricht, umzusetzen, um die Bildung des Katalysators, der den Komplex M(Ar)(AlX₄)₃ enthält, zu erhalten.

13. Verfahren zur Herstellung eines trägergebundenen festen Katalysators, wobei der Katalysator wie in einem der Ansprüche 1 bis 8 definiert ist, **dadurch gekennzeichnet, dass** es darin besteht, in dem aromatischen Kohlenwasserstofflösemittel Ar den festen Träger gemeinsam mit einem Überschuss an Aluminiumhalogenid AlX₃ und dem vom gleichen Halogen stammenden Seltenerdmetallhalogenid MX₃ umzusetzen, um die Bildung des Katalysators, der den Komplex M(Ar)(AlX₄)₃ enthält, zu erhalten.

14. Herstellungsverfahren nach einem der Ansprüche 9 bis 13, **dadurch gekennzeichnet, dass** es darin besteht, den Katalysator mit einer Verbindung, die der Formel AlXₙR₃₋ₙ entspricht, worin Al ein Aluminiumatom ist, X ein Halogenatom ist, bei dem es sich Fluor, Chlor, Brom oder Iod handeln kann, R ein Wasserstoffatom oder eine Alkylgruppe bedeutet, die 1 bis 15 Kohlenstoffatome aufweist, und n eine ganze Zahl ist, die im Bereich von 0 bis 3 liegen kann, umzusetzen.

15. Herstellungsverfahren nach Anspruch 14, **dadurch gekennzeichnet, dass** es darin besteht, Triethylaluminium, Triisobutylaluminium oder Diethylaluminiumchlorid für die Verbindung der Formel AlXₙR₃₋ₙ zu verwenden.

16. Herstellungsverfahren nach einem der Ansprüche 9 bis 15, **dadurch gekennzeichnet, dass** es darin besteht, die anorganische(n) Metalloxidverbindung(en) zu dehydratisieren, anschließend die Metalloxidverbindung(en) partiell durch eine Wärmebehandlung bei einer Temperatur, die im Bereich von 300 bis 800° C liegt, zu dehydroxylieren, um den festen Träger herzustellen.

17. Herstellungsverfahren nach einem der Ansprüche 9 bis 16, **dadurch gekennzeichnet, dass** es darin besteht, für den festen Träger das Produkt der Umsetzung der anorganischen Metalloxidverbindung(en) mit einer Lewis-Säure der Formel M'Xₙ zu verwenden, worin n eine ganze Zahl ist, die im Bereich von 3 bis 5 liegt, X ein Halogenatom darstellt, bei dem es sich um Fluor, Chlor, Brom oder Iod handeln kann, und M' ein Metall ist, dessen Ordnungszahl Z wahlweise eine der beiden folgenden Bedingungen erfüllt:
Z ∈ {5; 13; 22; 26; 40; 50; 51; 72}, und
Z liegt im Bereich von 57 bis 71.

18. Herstellungsverfahren nach Anspruch 17, **dadurch gekennzeichnet, dass** es darin besteht, für das Metall M' Bor, Titan, Eisen, Aluminium, Zirconium, Zinn, Hafnium oder Antimon zu verwenden.

19. Herstellungsverfahren nach Anspruch 17 oder 18, **dadurch gekennzeichnet, dass** es darin besteht, die im festen Zustand und im Überschuss vorhandene Lewis-Säure der Formel M'Xₙ mit der oder den anorganischen Metalloxidverbindungen umzusetzen und anschließend die Säure zu sublimieren.

20. Herstellungsverfahren nach Anspruch 17 oder 18, **dadurch gekennzeichnet, dass** es darin besteht, die Lewis-Säure der Formel M'Xₙ gelöst in einem inerten Kohlenwasserstofflösemittel mit der oder den anorganischen Metalloxidverbindungen umzusetzen.

21. Verfahren zur Polymerisation konjugierter Diene in einem inerten Kohlenwasserstofflösemittel, das darin besteht, einen trägergebundenen festen Katalysator zu verwenden, **dadurch gekennzeichnet, dass** es darin besteht, als trägergebundenen festen Katalysator einen Katalysator zu verwenden, der nach einem Verfahren, das wie in einem der Ansprüche 9 bis 20 definiert ist, hergestellt wurde, und zu diesem Katalysator eine aktivierende Verbindung zu geben, die ein Trialkylaluminium oder ein Dialkylaluminiumhydrid umfasst.

22. Polymerisationsverfahren nach Anspruch 21, **dadurch gekennzeichnet, dass** es darin besteht, 1,3-Butadien und/oder Isopren als konjugierte Diene zu verwenden.

## Claims

1. Solid supported catalyst usable for the polymerisation of conjugated dienes, **characterised in that** it comprises the reaction product
A) of a complex represented by the formula M(Ar)(AlX₄)₃, where M is a rare earth metal selected from among the metals having an atomic number of between 57 and 71 in Mendeleyev's periodic table of elements, where Ar is an aromatic hydrocarbon solvent, where Al is aluminium and where X is a halogen atom which may be fluorine, chlorine, bromine or iodine,
B) a solid support comprising at least one inorganic metal oxide compound.

2. Solid supported catalyst according to claim 1, **characterised in that** said solid support comprises silica.

3. Solid supported catalyst according to claim 1 or 2, **characterised in that** it additionally comprises a compound represented by the formula AlXₙR₃₋ₙ, where Al is an aluminium atom, X is a halogen atom, which may be fluorine, chlorine, bromine or iodine, R is a hydrogen atom or an alkyl group having from 1 to 15 carbon atoms and n is an integer which may range from 0 to 3.

4. Solid supported catalyst according to claim 3, **characterised in that** said compound AlXₙR₃₋ₙ is triethylaluminium, triisobutylaluminium or diethylaluminium chloride.

5. Solid supported catalyst according to one of the preceding claims, **characterised in that** said rare earth metal M is neodymium.

6. Solid supported catalyst according to one of the preceding claims, **characterised in that** said halogen X is chlorine.

7. Solid supported catalyst according to one of the preceding claims, **characterised in that** said solid support comprises the reaction product of said inorganic metal oxide compound or compounds with a Lewis acid of the formula M'Xₙ, where n is an integer ranging from 3 to 5, where X represents a halogen atom, which may be fluorine, chlorine, bromine or iodine and where M' is a metal, the atomic number Z of which complies with either of the following two conditions:
Z ∈ {5; 13; 22; 26; 40; 50; 51; 72}, and
Z ranging from 57 to 71.

8. Solid supported catalyst according to one of the preceding claims, **characterised in that** said metal M' is selected from among boron, titanium, iron, aluminium, zirconium, tin, hafnium and antimony.

9. Process for the preparation of a solid supported catalyst, said catalyst being as defined in one of the preceding claims, **characterised in that** said process consists,
- in a first stage, in preparing said solid support,
- in a second stage, in preparing said complex of the formula M(Ar)(AlX₄)₃ by the reaction, in said solvent Ar, of a halide of said rare earth metal M, represented by the formula MX₄, and an identical halide of aluminium, represented by the formula AlX₃.
- in a third stage, in reacting said complex with said solid support to obtain said catalyst.

10. Preparation process according to claim 9, **characterised in that** it consists in performing said reaction between the aluminium halide AlX₁₀ and said rare earth metal halide MX₉ in such a manner that the molar ratio AlX₃:MX₃ is greater than or equal to 3.

11. Preparation process according to claim 10, **characterised in that** it consists in performing said reaction in such a manner that the molar ratio is between 4 and 7.

12. Process for the preparation of a solid supported catalyst, said catalyst being as defined in one of claims 1 to 8, **characterised in that** said process consists,
- in a first stage, in reacting said solid support in said aromatic hydrocarbon solvent Ar with an excess of an aluminium halide represented by the formula AlX₃ and,
- in a second stage, in reacting the product of said first stage with an identical halide of said rare earth metal represented by the formula MX₃ in order to achieve formation of said catalyst comprising said complex M(Ar)(AlX₄)₃.

13. Process for the preparation of a solid supported catalyst, said catalyst being as defined in one of claims 1 to 8, **characterised in that** said process consists in concomitantly reacting, in said aromatic hydrocarbon solvent Ar, said solid support with an excess of aluminium halide AlX₃ and with an identical halide of a rare earth MX₃, in order to achieve formation of said catalyst comprising said complex M(Ar)(AlX₄)₃.

14. Preparation process according to one of claims 9 to 13, **characterised in that** it consists in reacting said catalyst with a compound represented by the formula AlXₙR₃₋ₙ, where Al is an aluminium atom, X is a halogen atom, which may be fluorine, chlorine, bromine or iodine, R is a hydrogen atom or an alkyl group having from 1 to 15 carbon atoms and n is an integer which may range from 0 to 3.

15. Preparation process according to claim 14, **characterised in that** it consists in using triethylaluminium, triisobutylaluminium or diethylaluminium chloride as said compound of the formula AlXₙR₃₋ₙ.

16. Preparation process according to one of claims 9 to 15, **characterised in that** it consists in dehydrating said inorganic metal oxide compound or compounds and then partially dehydroxylating them by heat treatment at a temperature of between 300 °C and 800 °C for the purpose of preparing said solid support.

17. Preparation process according to one of claims 9 to 16, **characterised in that** consists in using for said solid support the reaction product of said inorganic metal oxide compound or compounds with a Lewis acid of the formula M'Xₙ, where n is an integer ranging from 3 to 5, where X represents a halogen atom, which may be fluorine, chlorine, bromine or iodine and where M' is a metal, the atomic number Z of which complies with either of the following two conditions:
Z ∈ {5; 13; 22; 26; 40; 50; 51; 72}, and
Z ranging from 57 to 71.

18. Preparation process according to claim 17, **characterised in that** it consists in using boron, titanium, iron, aluminium, zirconium, tin, hafnium or antimony as said metal M'.

19. Preparation process according to claim 17 or 18, **characterised in that** it consists in reacting said Lewis acid of the formula M'Xₙ in the solid state and in excess with said inorganic metal oxide compound or compounds and then subliming said acid.

20. Preparation process according to claim 17 or 18, **characterised in that** it consists in reacting said Lewis acid of the formula M'Xₙ in solution in an inert hydrocarbon solvent with said inorganic metal oxide compound or compounds.

21. Process for the polymerisation of conjugated dienes in an inert hydrocarbon solvent consisting in using a solid supported catalyst, **characterised in that** said process consists in using, as the solid supported catalyst, a catalyst prepared according to a process as defined in one of claims 9 to 20 and of adding to this catalyst an activator compound comprising a trialkylaluminium or a dialkylaluminium hydride.

22. Polymerisation process according to claim 21, **characterised in that** it consists in using 1,3-butadiene and/or isoprene as the conjugated dienes.
